# EUROPÄISCHE PATENTSCHRIFT

(11) **EP 1 697 022 B1**
(45) Veröffentlichungstag und Bekanntmachung des Hinweises auf die Patenterteilung: **17.02.2010**
(21) Anmeldenummer: 04803911.9
(22) Anmeldetag: 13.12.2004
(51) Int. Cl.: B01D 53/26, B01D 8/00, F28D 7/10, G01N 1/22

(54) **VORRICHTUNG ZUR KÄLTETROCKNUNG EINES GASES ODER EINES GAS-DAMPF-GEMISCHES**
DEVICE FOR COLD DRYING A GAS OR A GAS-VAPOR MIXTURE
DISPOSITIF DE SECHAGE A FROID D'UN GAZ OU D'UN MELANGE GAZ-VAPEUR

(30) Priorität: 15.12.2003 DE 10358984; 12.08.2004 DE 102004039371
(43) Veröffentlichungstag der Anmeldung: 06.09.2006
(73) Patentinhaber: AGT Thermotechnik GmbH, 41812 Erkelenz (DE)
(72) Erfinder: FRISCHMANN, Werner, 58454 Witten (DE)
(74) Vertreter: Wolff, Felix
(86) Internationale Anmeldenummer: PCT/EP2004/014293
(87) Internationale Veröffentlichungsnummer: WO 2005/056162

(56) Entgegenhaltungen:
- EP-A- 0 553 706
- EP-A- 0 803 696
- US-B1- 6 273 940

## Beschreibung

Die Erfindung betrifft eine Vorrichtung zur Kältetrocknung eines Gases oder eines Gas-Dampf-Gemisches, insbesondere für Probengase, mit einer zwischen einem Gaseinlass und einem Gasauslass vorgesehenen Kühlstrecke und mit einer Wärmeübergangsfläche. Eine bekannte Vorrichtung ist in EP-A-O 553 706 beschrieben.

Solche Vorrichtungen sind allgemein bekannt und werden insbesondere bei Emissionsschutzmessungen, industriellen Prozessen, bei Abgaskaminen und bei Motorprüfständen angewendet, beispielsweise bevor eine Gasanalyse durchgeführt wird. Es ist nämlich so, dass ein zu hoher im zu analysierenden Gas befindlicher Feuchtigkeitsanteil die Analyse verfälscht oder zu Störungen des Analysegerätes führt. Daher ist es wünschenswert, bei derartigen feuchten Gasen die Taupunkttemperatur abzusenken, um die kondensierten Dämpfe, d.h. das Kondensat, vom Gas zu trennen. Hierfür wird das Gas abgekühlt.

Bei den bekannten Vorrichtungen ist es jedoch nachteilig, dass zum einen ein Kältetransfer von außen nach innen stattfindet und dass zum anderen der Wärmeübergang vergleichsweise klein ist. Beides zusammen ergibt, dass bekannte Vorrichtungen wenig bauraumeffizient, wenig energieeffizient, schlecht skalierbar und vergleichsweise teuer sind.

Der Erfindung liegt daher die Aufgabe zugrunde, eine Vorrichtung zur Kältetrocknung zu schaffen, die die Nachteile des Standes der Technik vermeidet und darüber hinaus schnell, einfach und kostengünstig herstellbar ist.

Diese Aufgabe wird erfindungsgemäß durch eine Vorrichtung zur Kältetrocknung eines Gases oder eines Gas-Dampf-Gemisches mit einer zwischen einem Gaseinlass und einem Gasauslass vorgesehenen Kühlstrecke und einer Wärmeübergangsfläche, wobei die Kühlstrecke zumindest teilweise eine hydro- und/oder oleophobe Oberfläche aufweist. Hydrophob und/oder oleophob im Sinne der Erfindung bedeutet, dass der Kontaktwinkel eines Wasser- und/oder Öltropfens, der auf einer ultraphoben Oberfläche liegt, mehr als 90°, vorzugsweise mehr als 150° und am besonders bevorzugt mehr als 160° und am meisten bevorzugt mehr als 170° beträgt und/oder der Abrollwinkel 20°, vorzugsweise 10° nicht überschreitet. Als Abrollwinkel wird der Neigungswinkel einer grundsätzlich planen aber strukturierten Oberfläche gegen die Horizontale verstanden, bei dem ein stehender Wasser- und/oder Öltropfen mit einem Volumen von 10 µl aufgrund der Schwerkraft bei einer Neigung der Oberfläche bewegt wird. Solche ultraphoben Oberflächen sind zum Beispiel in der WO 98/23549, WO 96/04123, WO 96/21523, WO 99/10323, WO 99/10324, WO 99/10111, WO 99/10113, WO 99/10112 und WO 96/34697 offenbart. Diese Oberflächen haben den Vorteil, dass sich wenn überhaupt nur sehr geringe Flüssigkeitsmengen in der Kühlstrecke halten können, so dass eine sehr gute Trennung zwischen Gas- und auskondensierter Flüssigkeit erfolgt. Des weiteren vereisen derartige Oberflächen wenn überhaupt nur sehr geringfügig.

Bevorzugt ist, dass die Kühlstrecke die Wärmeübergangsfläche in einer zu einer gedachten Verbindungslinie zwischen dem Gaseinlass und dem Gasauslass senkrechten Querschnittsebene im wesentlichen vollständig umgibt. Im allgemeinen ist dabei nämlich die Wärmeübergangsfläche im wesentlichen entsprechend der Mantelfläche eines Zylinders bzw. eines Kegelstumpfes ausgebildet, weist also einen Innenbereich und einen Außenbereich auf. Der Vorrichtung ist erfindungsgemäß im Innenbereich eine Kühleinrichtung entweder zugeordnet oder aber die Vorrichtung umfasst die Kühleinrichtung im Innenbereich der Wärmeübergangsfläche. Hierdurch wird der Kältetransfer von Innen nach außen auf besonders einfache Weise realisiert.

Vorzugsweise ist es vorgesehen, dass die Vorrichtung "steht", d.h. die Mittelachse des Zylinders bzw. Kegelstumpfes, dessen Mantelfläche ungefähr mit der Wärmeübergangsfläche zusammenfällt, ist vertikal orientiert. In diesem Fall ist es insbesondere vorgesehen, dass der Gaseinlass für das zu trocknende Gas im oberen Bereich der Vorrichtung angeordnet ist und dass der Gasauslass für das zu trocknende Gas im unteren Bereich, jedoch nicht am unteren Ende der Vorrichtung, angeordnet ist. Auf diese Weise bewegt sich das zu trocknende Gas auf seiner Kühlstrecke zwischen dem Gaseinlass und dem Gasauslass nach unten und wird hierbei abgekühlt. In einer anderen bevorzugten Ausführungsform ist der Gaseinlass im unteren Bereich angeordnet. Diese Ausführungsform der vorliegenden Erfindung hat den Vorteil, dass die Verfälschung der nachfolgenden Messungen minimal ist. Diese Ausführungsform der vorliegenden Erfindung findet insbesondere bei Kühlstrecken mit einer hydrophoben oder oleophoben Oberfläche Anwendung. Vorzugsweise sind sowohl im Gaseinlass- als auch im Gasauslassbereich Beruhigungsstrecken auf, so dass das zu kühlende Gas die Kühlfläche gleichmäßig umstreicht und vermieden wird, dass durch die Gasströmung Flüssigkeitstropfen mitgerissen werden. Die Querschnittsebene schneidet die angesprochene Mittelachse des Zylinders oder Kegelstumpfes im wesentlichen rechtwinklig, so dass der Querschnitt der Wärmeübergangsfläche bzw. der Querschnitt des Innenbereichs der Wärmeübergangsfläche in der Querschnittsebene bei einer zylinderförmigen Wärmeübergangsfläche rund und bei einer pyramidenstumpfförmigen Wärmeübergangsfläche quadratisch ist.

Bei der erfindungsgemäßen Vorrichtung ist es das Ziel, möglichst gut und schnell das durch den Gaseinlass in die Kühlstrecke einströmende Gas abzukühlen, beispielsweise von etwa 150°C auf etwa 3°C, und hierbei von Feuchtigkeit zu befreien. Die im Gas (am Gaseinlass) enthaltene Feuchtigkeit kondensiert in Form von Tropfen (Kondensat) aus, wobei die Tropfen möglichst groß sein sollten. Hierdurch wird bei gegebenem Kondensatvolumen oder -gewicht die Kontaktfläche zwischen dem Gas und dem Kondensat reduziert, was die Genauigkeit einer Bestimmung der ursprünglich vorhandenen Gasbestandteile bei einer nachfolgenden Analyse des getrockneten Gases verbessert und außerdem eine bessere Trennung zwischen dem Gas und dem Kondensat herbeiführt. Die Genauigkeit einer Bestimmung von Gasbestandteilen wird unter anderem deshalb erleichtert, weil sich bei einer kleineren Kontaktfläche zwischen Kondensat und Gas weniger Gas im Kondensat löst. Die bessere Trennung zwischen dem Gas und dem Kondensat wird unter anderem deshalb erleichtert, weil bei einer gegebenen Strömungsgeschwindigkeit des Gases an einem gegebenen Ort bei größeren Kondensattröpfchen weniger Tröpfchen mit der Strömung mitgerissen werden als bei kleineren Tröpfchen. Erfindungsgemäß ist es insbesondere wünschenswert, wenn ein möglichst großer Anteil von sich auf der Kühlstrecke bildenden Kondensattropfen größer als 10 bis 15 µm ist. Hierdurch wird die Löslichkeit von nach der Kühltrocknung des Gases zu messenden Gasbestandteilen in dem Kondensat - insbesondere SO₂ und/oder NOₓ - stark herabgesetzt. Große Tropfen werden insbesondere durch Kühlstrecken mit einer hydrophoben und/oder oleophoben Oberfläche erzielt, weil auf diesen Flächen kleine Tropfen zu großen Tropfen zusammenlaufen.

Bevorzugt ist die Kühlstrecke derart vorgesehen, dass beim Durchströmen der Kühlstrecke wenigstens ein im wesentlichen vollständiger Umlauf des Gases zumindest um einen Teil der Wärmeübergangsfläche vorgesehen ist. Hierdurch wird zum einen die Wärmeübergangsfläche möglichst gut ausgenutzt bzw. die Kühleffizienz bzw. der Wärmeübergang wird verbessert. Zum anderen ist es hierdurch möglich, dass weiterhin die Trennung zwischen den sich im abkühlenden Gas bildenden Kondensattröpfchen und dem Gas dadurch verbessert wird. Vorzugsweise ist die Strömung im wesentlichen spiralförmig um die Wärmeübergangsfläche verlaufend vorgesehen ist. Hierdurch werden die Tröpfchen aufgrund ihrer vergleichsweise großen Masse an die außenliegende Wand der Kühlstrecke gedrängt und dadurch abgetrennt.

Bevorzugt ist weiterhin, dass parallel zur Querschnittsebene der Querschnitt der Wärmeübergangsfläche im wesentlichen rund ist und dass am Gaseinlass der Querschnitt eines Innenbereichs der Wärmeübergangsfläche parallel zur Querschnittsebene kleiner ist als am Gasauslass, insbesondere dass die Wärmeübergangsfläche im wesentlichen kegelstumpfförmig oder pyramidenstumpfförmig vorgesehen ist. In einer anderen bevorzugten Ausführungsform ist Querschnittsfläche über die gesamte Länge des Wärmetauchers konstant. Ein runder Querschnitt hat den Vorteil, dass die Krümmung im wesentlichen konstant ist und somit der Strömungswiderstand vergleichsweise klein ist und kontinuierlich die gebildeten Kondensattröpfchen (aufgrund der auf die Tröpfchen wirkenden Zentrifugalkraft) vom Gas abgetrennt werden. Die Wärmeübergangsfläche bzw. ihr Innenbereich kann entweder einen konstanten Querschnitt über die gesamte Kühlstrecke aufweisen oder aber es kann die Wärmeübergangsfläche bzw. ihr Innenbereich konisch vorgesehen sein. Eine konisch vorgesehene Wärmeübergangsfläche hat den Vorteil, dass die Anforderungen an die Herstelltoleranzen der Vorrichtung bzgl. der Abmessungen der Wärmeübergangsfläche geringer sein können, wodurch die erfindungsgemäße Vorrichtung kostengünstiger herstellbar ist. In diesem Fall können die Abmessungen der Wärmeübergangsfläche in stärkerem Maße variieren und es ist trotzdem möglich, dass ein lediglich kleiner Spalt an der Wärmeübergangsfläche (zur Kühleinrichtung hin) einen guten Wärmeübergang bewirkt; insbesondere befindet sich in diesem Spalt eine Wärmeleitpaste zur weiteren Verbesserung des Wärmeübergangs. Vorzugsweise umgibt die Innenwandung der Kühlstrecke die Außenwandung der Kühleinrichtung möglichst weitgehend, vorzugsweise vollständig formschlüssig. Vorzugsweise ist die Innenwandung der Kühlstrecke auf die Außenwandung der Kühleinrichtung aufgeschrumpft.

Bevorzugt ist ferner, dass der Vorrichtung wenigstens ein Teil einer zumindest teilweise im Innenbereich der Wärmeübergangsfläche vorgesehenen Kühleinrichtungzugeordnet ist und/oder dass die Kühleinrichtung eine Überflutungskühleinrichtung ist. Die Kühleinrichtung wird im Folgenden auch als Wärmetauscher bezeichnet. Erfindungsgemäß ist es vorteilhaft möglich, das gesamte Volumen des Innenbereichs der Wärmeübergangsfläche für die Kühleinrichtung zu verwenden, so dass es möglich ist, eine Überflutungskühleinrichtung zu benutzen. Dies wiederum ermöglicht es, mehrere solcher Überflutungskühleinrichtungen hintereinander zu "schalten" und trotzdem an jeder solchen Teilkühleinrichtung eine gut reproduzierbare Kühlleistung zu erzielen. Hierdurch ist es möglich, auch mehrere erfindungsgemäße Vorrichtungen (mit jeweils einer Wärmeübergangsfläche) zu verwenden, so dass es bei der erfindungsgemäßen Vorrichtung möglich ist, eine nahezu beliebige Skalierbarkeit zu erreichen. Beispielsweise ist es dadurch möglich, eine Mehrzahl von erfindungsgemäßen Vorrichtungen entweder parallel zu schalten oder hintereinander zu schalten, so dass erfindungsgemäß nahezu für beliebig große zu kühlende bzw. zu trocknende Gasströme mit einfachen Mitteln eine passende und damit wirtschaftliche Kältetrocknung möglich ist. Beispielsweise ist es erfindungsgemäß überraschend möglich, einen modularen Wärmetauscher-Aufbau für Volumenströme zwischen 80 Liter/Stunde bis zu 1000 Liter/Stunde zu bewirken und bis zu 6 Wärmetauscher in Serien- bzw. Parallelschaltung anzuordnen. Weiterhin ist eine einfache Reinigung durch eine einfache Demontage des Wärmetauschergehäuses möglich. Alternativ oder zusätzlich zu der angesprochenen Überflutungskühleinrichtung kann es erfindungsgemäß vorteilhaft auch vorgesehen sein, dass eine Peltierkühleinrichtung mit der Vorrichtung verwendet wird. Bevorzugt ist die Peltierkühleinrichtung in diesem Fall in der Nähe eines Kondensatauslasses - d.h. in der Regel im unteren Bereich der erfindungsgemäßen Vorrichtung - angeordnet und thermisch gut leitend - beispielsweise über einen in dem Innenbereich der erfindungsgemäßen Vorrichtung angeordneten Aluminium- oder sonstigen Metallzylinder - mit der Wärmeübergangsfläche verbunden. Es ergibt sich in diesem Fall ein Wärmestrom von der Wäremübergangsfläche über den Metallzylinder bzw. über den Innenbereich der Vorrichtung zur Peltierkühleinrichtung.

Ferner ist bevorzugt, dass die Kühlstrecke im wesentlichen zwischen einer ersten inneren Wandung und einer zweiten äußeren Wandung vorgesehen ist, wobei die Wandungen die Wärmeübergangsfläche im wesentlichen vollständig umgeben. Hierdurch ist es möglich, dass die gesamte Vorrichtung auf effiziente Weise durch die Kühleinrichtung gekühlt wird, wodurch die Temperaturdifferenzen vergleichsweise klein sein können, was zu einer vergleichsweise niedrigen Dimensionierung der Kühlleistung der Kühleinrichtung führt.

Bevorzugt ist weiterhin, dass zwischen der ersten Wandung und der zweiten Wandung eine Ablaufrinne vorgesehen ist, wobei die Ablaufrinne vorzugsweise spiralförmig angeordnet ist. Hierdurch kann in effizienter Weise die Abführung des Kondensats bewirkt werden.

Ferner ist bevorzugt, dass die erste Wandung und/oder die zweite Wandung entlang der vorgesehenen Ablaufrinne wenigstens eine Rinnenäusnehmung umfasst. Hierdurch ist es möglich, dass die Ablaufrinne nicht durch das Material der ersten Wandung bzw. der zweiten Wandung gebildet wird, sondern dass die Ablaufrinne dadurch realisiert wird, dass in die Rinnenausnehmung ein die innere Wandung mit der äußeren Wandung verbindendes Material eingelegt wird. Bevorzugt ist zur Bildung der Ablaufrinne eine Dichtung, insbesondere aus einen runden oder einen ovalen Querschnitt aufweisendem Gummimaterial, in der Rinnenausnehmung angeordnet. Hierdurch ist es möglich, dass das die Ablaufrinne bildende Material in einfacher und kostengünstiger Weise in Form eines beispielsweise extrudierten Gummimaterial bereitstellbar ist. Es kann somit beispielsweise Meterware verwendet werden, die - an die jeweiligen Bedingungen hinsichtlich ihres Querschnitts bzw. hinsichtlich ihres Materials angepasst - sehr kostengünstig verwendbar ist.

Vorzugsweise ist die innere Wandung der Kühlstrecke und die Ablaufrinne jedoch einstückig gefertigt, beispielsweise gedreht oder gegossen.

Bevorzugt ist weiterhin, dass parallel zur Rinnenausnehmung eine weitere Rinnenausnehmung derart vorgesehen ist, dass die Vorrichtung parallel zur Kühlstrecke eine Ablaufstrecke aufweist. Ferner ist bevorzugt, dass die Vorrichtung zur Bildung der Ablaufrinne und der Ablaufstrecke eine weitere Dichtung, insbesondere aus einen runden oder einen ovalen Querschnitt aufweisendem Gummimaterial, in der weiteren Rinnenausnehmung aufweist. Hierdurch ist es möglich, dass auf einfache Weise entlang der Kühlstrecke die Ablaufstrecke gebildet wird, so dass der jeweils untere Teil des Querschnitts der Kühlstrecke aufgrund der Abtrennung der Ablaufstrecke die Trennung des Gases vom Kondensat bzw. der Ablauf des Kondensates weiter verbessert wird.

Weiterhin ist bevorzugt, dass die Vorrichtung einen Kondensatauslass im Bereich des Endes der Kühlstrecke aufweist, wobei bevorzugt ist, dass entlang der Kühlstrecke und vor dem Kondensatauslass ein weiterer Kondensatauslass vorgesehen ist, insbesondere im Bereich der Mitte der Kühlstrecke bzw. im Bereich von zwei Dritteln der Kühlstrecke. Es ist auf diese Weise möglich, eine noch bessere Trennung zwischen Kondensat und Gas herbeizuführen, so dass - insbesondere bei zwei vorhandenen Kondensatauslassen - eine Verbesserung der Kühltrocknung mit verlässlicheren Messwerten bei der nachfolgenden Analytik erzielt werden kann. Durch den weiteren Kondensatauslass ist es beispielsweise möglich, das Kondensat vom Gas abzutrennen, nachdem eine Abkühlung des Gases von beispielsweise 65°C auf beispielsweise 18°C erzielt wurde, d.h. nachdem das Gas den größten Teil seiner Feuchtigkeit kondensiert hat.

Ferner ist bevorzugt, dass die weitere Dichtung an wenigstens einer Unterbrechungsstelle unterbrochen ist. Hierdurch wird bewirkt, dass das sich im unteren Teil des Querschnitts der Kühlstrecke bildende Kondensat an der Unterbrechungsstelle von der Kühlstrecke in die Ablaufstrecke begibt, so dass dieser Teil des Kondensats auf überraschende Weise noch besser vom Gas getrennt geführt werden kann. Die Unterbrechungsstelle übernimmt in diesem Fall eine ähnliche Funktion wie der weitere Kondensatauslass, so dass in überraschender Weise auf sehr einfache Art die Funktion eines weiteren Kondensatauslasses oder auch einer Mehrzahl weiterer Kondensatauslasse auf dem Verlauf der Kühlstrecke verteilt - beispielsweise bei einem Drittel und bei zwei Dritteln - erzielt werden kann.

Ferner ist bevorzugt, dass das Keramikmaterial ein Carbid-Material umfasst, insbesondere reaktionsgebundenes siliciuminfiltriertes Siliziumcarbid-Material (SiSiC). Die Benutzung von anderen Siliziumcarbid-Materialien ist erfindungsgemäß ebenfalls möglich. Weiterhin kommt erfindungsgemäß insbesondere die Verwendung von drucklos gesintertem Siliciumcarbid (SSIC) in Betracht. Durch diese Materialwahl wird überraschend eine extrem erhöhte Effizienz der Vorrichtung hinsichtlich ihres Wärmetransports bewirkt und weiterhin eine erhöhte Gasundurchlässigkeit sowie eine Vermeidung einer Wasseraufnahme erreicht. Weiterhin ist die Temperaturbeständigkeit, die Druckbeständigkeit und die Beständigkeit gegenüber Korrosion größer als bei bisher verwendeten Materialien.

Die Kühlstrecke kann aus jedem beliebigen Material gefertigt werden. Vorzugsweise ist die Innere Wandung und gegebenenfalls die Ablaufrinne jedoch aus Metall, besonders bevorzugt Aluminium gefertigt. In einer besonders bevorzugten Ausführungsform der vorliegenden Erfindung ist das Metall zumindest in dem Bereich der Flächen, der mit dem zu kühlenden Gas in Kontakt kommt, mit einem Oxidationsschutz und/oder einer wasser- und/oder ölabweisenden Beschichtung, beispielsweise PTFE (Polytetrafluorethylen; Teflon^{®}), versehen. Ganz besonders bevorzugt wird das Metall zumindest in dem Bereich der Flächen, der mit dem zu kühlenden Gas in Kontakt kommt, so mit einer Mikrostruktur versehen und dann mit einem hydrophoben und/oder oleophoben Überzug versehen, dass eine hochwasser- und/oder ölabweisende Oberfläche resultiert. Ein derartiges Verfahren ist beispielsweise in der DE 19860140.9 beschreiben, die hiermit als Referenz eingeführt wird und somit als Teil der Offenbarung gilt.

Die Erfindung wird nachfolgend anhand von in der Zeichnung dargestellten Ausführungsbeispielen näher erläutert.
- **Figur 1**: zeigt eine erfindungsgemäße Vorrichtung mit einer Kühleinrichtung in einer Schnittdarstellung.
- **Figur 2**: zeigt ein Innenteil der erfindungsgemäßen Vorrichtung in perspektivischer Darstellung.
- **Figur 3**: zeigt eine konische Ausführungsform des Innenteils der erfindungsgemäßen Vorrichtung in einer Vorder-, Seiten- und Schnitttansicht sowie in Draufsicht.
- **Figur 4**: zeigt die konische Ausführungsform des Innenteils der erfindungsgemäßen Vorrichtung in perspektivischer Darstellung.
- **Figur 5**: zeigt die konische Ausführungsform der erfindungsgemäßen Vorrichtung in Schnittdarstellung.
- **Figur 6**: zeigt eine weitere Ausführungsform des Innenteils der erfindungsgemäßen Vorrichtung in perspektivischer Darstellung.
- **Figur 7**: zeigt eine vergrößerte Darstellung eines Ausschnitts der Figur 6.
- **Figur 8**: zeigt eine weitere Ausführungsform der erfindungsgemäßen Vorrichtung.

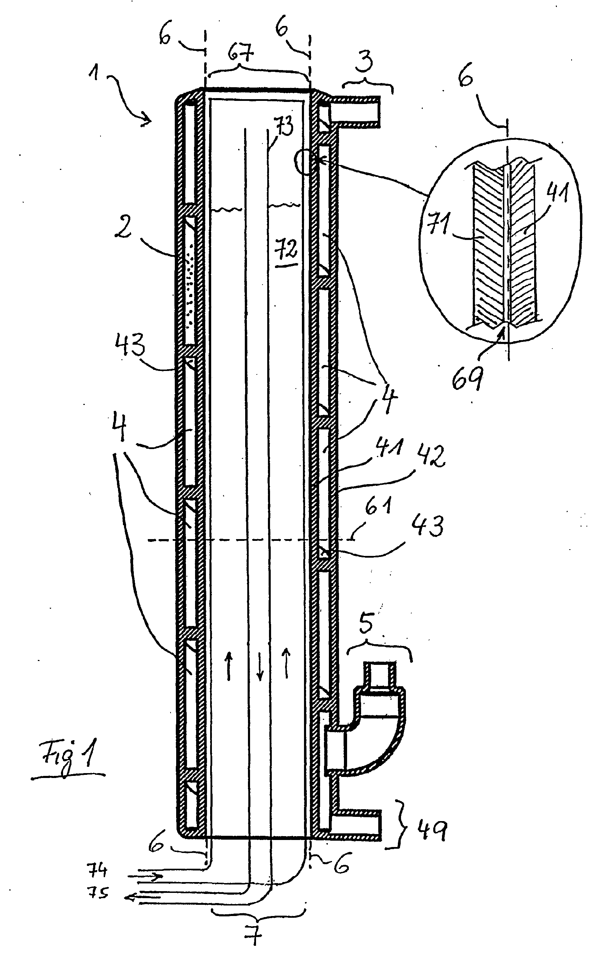

In **Figur 1** ist eine erfindungsgemäße Vorrichtung 1 mit einer Kühleinrichtung 7 in einer Schnittdarstellung dargestellt. Die Kühleinrichtung 7 und die Vorrichtung 1 grenzen an einer Wärmeübergangsfläche 6 aneinander, wobei die Kühleinrichtung 7 im Innenbereich 67 der Wärmeübergangsfläche 6 angeordnet ist. Die Vorrichtung 1 weist eine erste (innere) Wandung 41 und eine zweite (äußere) Wandung 42 auf, zwischen denen sich eine Kühlstrecke 4 befindet. Die Kühlstrecke 4 ist im wesentlichen ein hohles Volumen der Vorrichtung 1, das mit einem Gaseinlass 3 und einem Gasauslass 5 verbunden ist und durch welches ein zu trocknendes und/oder ein abzukühlendes Gas 2 bzw. ein Gas-Dampf-Gemisch 2 strömt. Eine Fortsetzung des Ortes der Wärmeübergangsfläche 6 ist in Figur 1 mittels einer gestrichelten Linie im Bereich des Gaseinlasses 3 bzw. des Gasauslasses 5 dargestellt. Das zwischen den Wandungen 41, 42 befindliche Volumen ist durch eine Ablaufrinne 43 strukturiert, so dass sich die Kühlstrecke 4 zwischen dem Gaseinlass 3 und dem Gasauslass 5 ergibt. Mit der Kühlstrecke 4 bzw. mit dem zwischen den Wandungen 41, 42 befindlichen Volumen ist weiterhin ein Kondensatauslass 49 verbunden. Vorzugsweise ist der Kondensatauslass 49 unterhalb des Gasauslasses 5 und insbesondere an der tiefsten Stelle des zwischen den Wandungen 41, 42 befindlichen Volumens angeordnet.

Im dargestellten Ausführungsbeispiel der Vorrichtung 1 ist die Ablaufrinne 43 derart ausgebildet, dass sich ein im wesentlichen spiralförmiger Verlauf der Kühlstrecke 4 ergibt. Es könnte jedoch in einer alternativen (nicht dargestellten) Ausführungsform auch vorgesehen sein, dass eine modifizierte "Ablaufrinne" eine mäanderförmige Struktur der Kühlstrecke 4 bewirkt, um beispielsweise zwei separate Volumenströme (bspw. unterschiedlicher Gase) in der Kühlstrecke haben zu können. Weiterhin könnte in einer weiteren alternativen (und ebenfalls nicht dargestellten) Ausführungsform die weitere alternative "Ablaufrinne" derart vorgesehen sein, dass sie lediglich in Form von Leitschaufeln ausgebildet ist. In dieser letzten Alternative würde das durch die Kühlstrecke 4 strömende Gas 2 nicht zwingend im wesentlichen vollständig um die Wärmeübergangsfläche 6 umlaufen. Bei den beiden anderen zuvor beschriebenen Alternativen - d.h. einer spiralförmigen Kühlstrecke 4 bzw. einer mäanderförmigen Kühlstrecke 4 - wird dem in der Kühlstrecke 4 strömenden Gas 2 ein Verlauf aufgezwungen, wodurch ein im wesentlichen vollständiges Umlaufen der Wärmeübergangsfläche 6 durch das Gas 2 bewirkbar ist.

Mittels einer weiteren gestrichelten Linie ist eine im wesentlichen rechtwinklig auf einer gedachten Verbindungslinie zwischen dem Gaseinlass 3 und dem Gasauslass 5 stehende Querschnittsebene 61 im mittleren Bereich der Vorrichtung 1 angedeutet. In der Querschnittsebene 61 ist die Wärmeübergangsfläche 6 erfindungsgemäß insbesondere im wesentlichen rund bzw. es weist der Innenbereich 67 der Wärmeübergangsfläche 6 einen im wesentlichen runden Querschnitt auf. Erfindungsgemäß ist es jedoch ebenfalls möglich, dass dieser Querschnitt im wesentlichen quadratisch, rechteckig, oval oder mehreckig ist.

Die Kühleinrichtung 7 weist insbesondere eine Außenwandung 71 auf, die möglichst nahe an der ersten Wandung 41 der Vorrichtung 1 angeordnet ist. Zwischen der Außenwandung 71 der Kühleinrichtung 7 und der ersten Wandung 41 der Vorrichtung 1 verläuft die Wärmeübergangsfläche 6, was in einer vergrößerten Teildarstellung im linken Teil der **Figur 1** dargestellt ist. Im Bereich der Wärmeübergangsfläche 6 kann zwischen der Kühleinrichtung 7 und der Vorrichtung 1 zur Verbesserung des Wärmeübergangs (bzw. "Kälteübergangs") eine Wärmeleitpaste 69 vorgesehen sein.

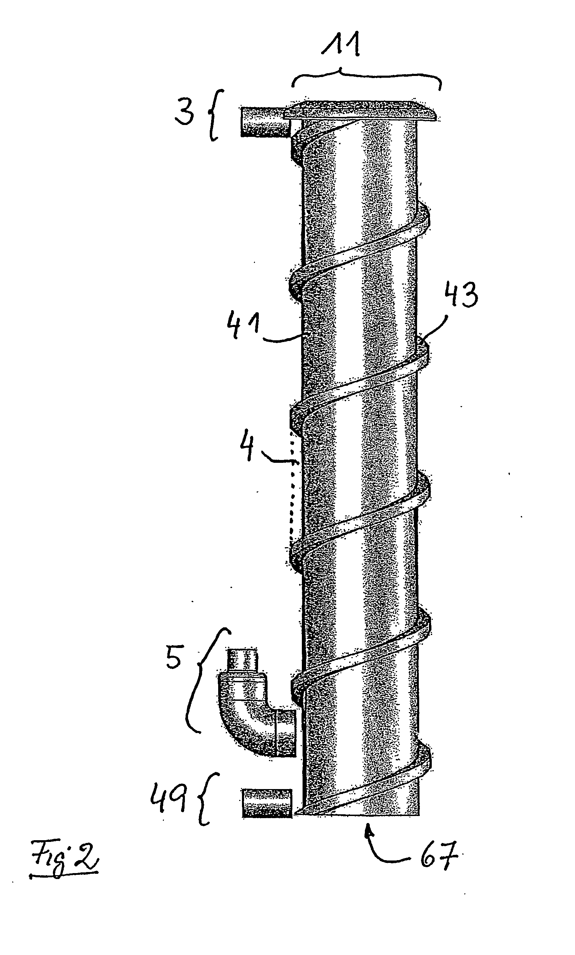

**Figur 2** zeigt ein Innenteil 11 der erfindungsgemäßen Vorrichtung 1 in perspektivischer Darstellung. Die zweite (äußere) Wandung 42 der Vorrichtung 1 ist in **Figur 2** der besseren Darstellung wegen nicht dargestellt. Dennoch umfasst erfindungsgemäß die Vorrichtung 1 sowohl die erste Wandung 41, die zweite Wandung 42 und die Ablaufrinne 43, wobei das Innenteil 11 lediglich die erste Wandung 41 und die Ablaufrinne 43 umfasst. Es kann erfindungsgemäß sowohl vorgesehen sein, dass die Vorrichtung 1 einstückig ausgeführt ist, als auch vorgesehen sein, dass die Vorrichtung 1 zweistückig ausgeführt ist, so dass die zweite Wandung 42 von dem Innenteil 11 - insbesondere für eine erleichterte Reinigung der Vorrichtung 1 - abnehmbar ist. Im ersten Fall (Vorrichtung 1 ist einstückig) ist die erste Wandung 41 über die Ablaufrinne 43 mit der zweiten Wandung 42 der Vorrichtung 1 (einstückig) verbunden. Im zweiten Fall (Vorrichtung 1 ist mehrstückig) passt das Innenteil 11 der Vorrichtung 1 derart zur zweiten Wandung 42, dass die Kühlstrecke 4 im wesentlichen dicht ist. Weiterhin ist in Figur 2 der Gaseinlass 3, der Gasauslass 5, der Kondensatauslass 49 und der Innenbereich 67 der Wärmeübergangsfläche 6 dargestellt.

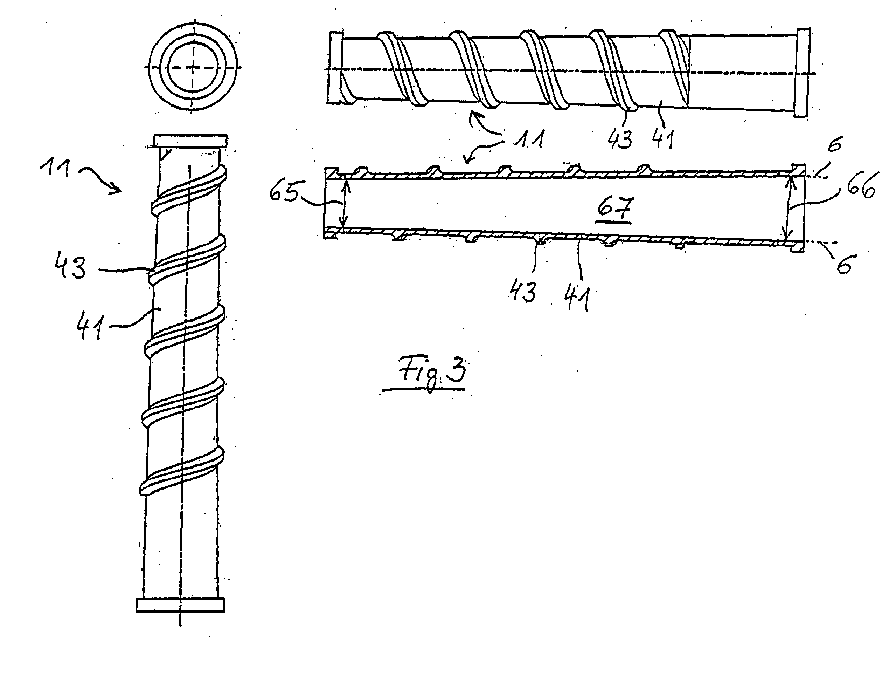

**Figur 3** zeigt eine konische Ausführungsform des Innenteils 11 der erfindungsgemäßen Vorrichtung 1 in einer Vorder-, Seiten- und Schnitttansicht sowie in Draufsicht. Bei der konischen Ausführungsform ist - im Gegensatz zu der in den Figuren 1 und 2 dargestellten "geraden" Ausführungsform der Vorrichtung 1 - ein erster Innenquerschnitt 65 der ersten Wandung 41 an einem Ende der Vorrichtung 1 (bzw. des Innenteils 11) kleiner als ein zweiter Innenquerschnitt 66 der ersten Wandung 41 an dem dem einen Ende gegenüberliegenden Ende der Vorrichtung 1 (bzw. des Innenteils 11). Hierdurch ist es möglich, dass mit einer (nicht dargestellten) entsprechenden konischen Ausführung der Außenwandung 71 der Kühleinrichtung 7 trotz gewisser Fertigungsschwankungen hinsichtlich der Maße der ersten Wandung 41 ein guter Wärmeübergang an der Wärmeübergangsfläche 6 erzielbar ist. Wiederum ist in Figur 3 der Innenbereich 67 der Vorrichtung 1 und die Ablaufrinne 43 dargestellt.

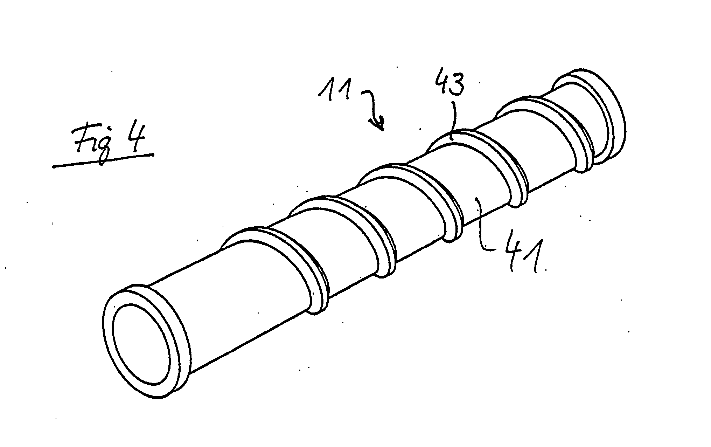

**Figur 4** zeigt die konische Ausführungsform des Innenteils 11 der erfindungsgemäßen Vorrichtung 1 in perspektivischer Darstellung mit der Ablaufrinne 43 und der ersten Wandung 41.

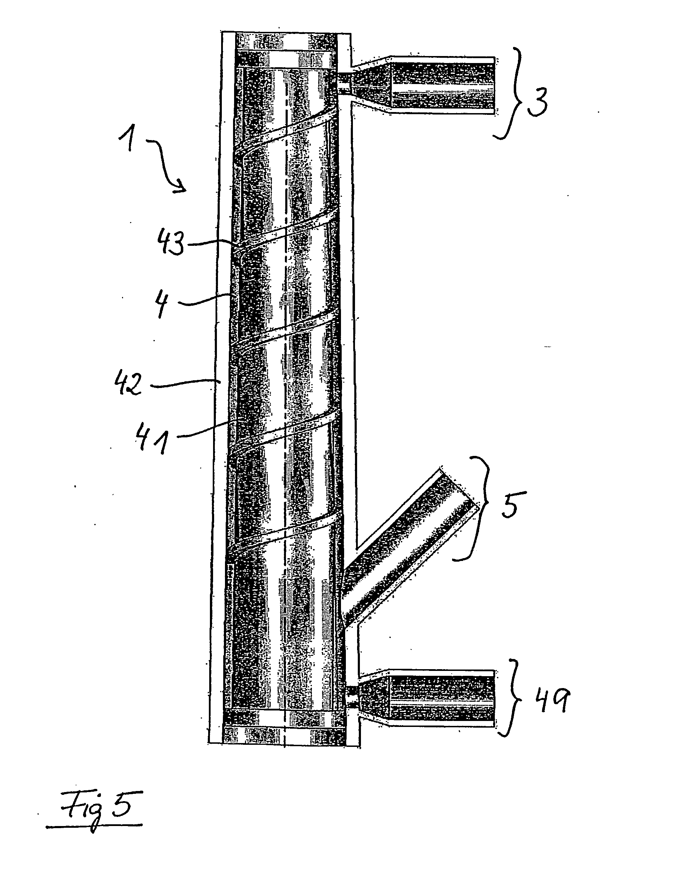

**Figur 5** zeigt die konische Ausführungsform der erfindungsgemäßen Vorrichtung 1 in Schnittdarstellung mit der Kühlstrecke 4, der Ablaufrinne 43, der ersten Wandung 41, der zweiten Wandung 42, dem Gaseinlass 3, dem Gasauslass 5 und dem Kondensatauslass 49.

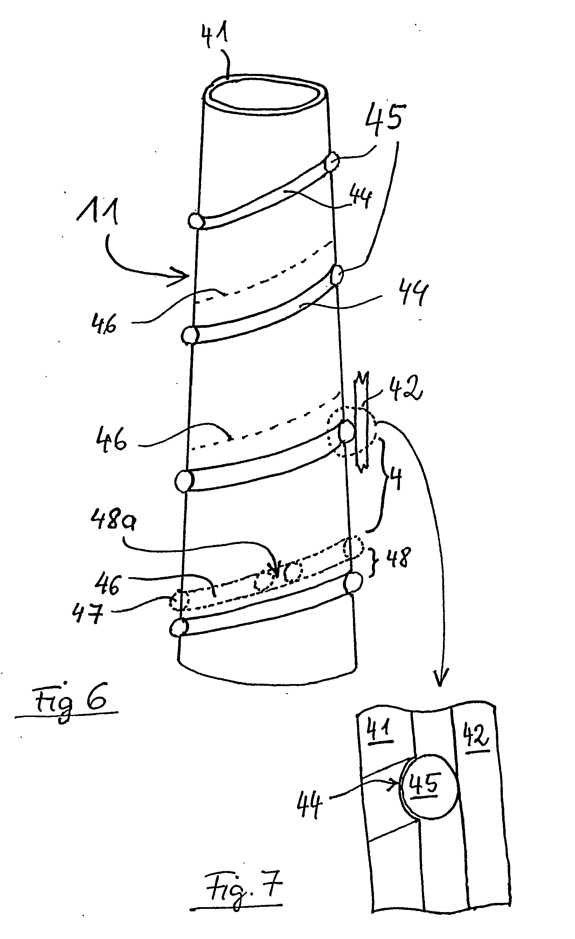

In **Figur 6** ist eine weitere Ausführungsform des Innenteils 11 der erfindungsgemäßen Vorrichtung 1 in perspektivischer Darstellung dargestellt. Bei der weiteren Ausführungsform des Innenteils 11 ist keine einstückig mit dem Innenteil 11 verbundene Ablaufrinne 43 vorgesehen (vgl. **Figuren 1 bis 5**), sondern es ist eine Rinnenausnehmung 44 vorgesehen, die sich im wesentlichen in dem Bereich erstreckt, der für die Ablaufrinne 43 vorgesehen ist. Die "Ablaufrinne 43" wird bei der weiteren Ausführungsform des Innenteils 11 durch ein mit dem Innenteil 11 verbundenes und in die Rinnenausnehmung 44 eingelegtes Materialstück 45 gebildet, das sich im zusammengebauten Zustand (nicht dargestellt) der Vorrichtung 1 zwischen der ersten (inneren) Wandung 41 und der zweiten (äußeren) Wandung 42 der Vorrichtung 1 erstreckt und eine Abdichtung zwischen den Wandungen 41, 42 bewirkt. Als Dichtung 45 bzw. als Dichtungsmaterial 45 ist erfindungsgemäß insbesondere vorgesehen, ein Gummimaterial 45 zu verwenden, welches insbesondere einen runden oder einen ovalen Querschnitt aufweist. Als Dichtungsmaterial 45 kann insbesondere O-Ring-Material, d.h. ausreichend elastisches und ausreichend beständiges Material, verwendet werden, wie beispielsweise Viton B. Die Abdichtungswirkung des in der Rinnenausnehmung 44 befindlichen Dichtungsmaterials 45 zwischen der ersten Wandung 41 und der zweiten Wandung 42 ist in vergrößerter Darstellung in **Figur 7** dargestellt.

In Figur 6 ist mittels gestrichelter Linien zusätzlich angedeutet, dass parallel zur Rinnenausnehmung 44 eine weitere Rinnenausnehmung 46 - insbesondere spiralförmig um die erste Wandung 41 verlaufend - vorgesehen sein kann, in die ebenfalls eine weitere Dichtung 47 bzw. ein weiteres Dichtungsmaterial 47 eingelegt werden kann, wobei eine Aufteilung des zwischen aufeinanderfolgenden "Windungen" des Dichtungsmaterials 45 und den Wandungen 41, 42 befindlichen Querschnitts auf die Kühlstrecke 4 und eine Ablaufstrecke 48 bewirkt wird. Die Ablaufstrecke 48 ist zum Ablaufen des Kondensats vorgesehen, wobei in einer besonders bevorzugten Ausführungsform der Vorrichtung 1 das weitere Dichtungsmaterial 47 eine oder mehrere Unterbrechungsstellen 48a entlang des Verlaufs der Kühlstrecke 4 aufweist, so dass eine Verbindung zwischen der Kühlstrecke 4 und der Ablaufstrecke 48 hergestellt ist. Durch die Unterbrechungsstelle(n) 48a ist es möglich, dass im oberen Bereich der Kühlstrecke 4 bereits angefallenes Kondensat von der Kühlstrecke 4 in die Ablaufstrecke 48 abläuft und dadurch wirksam vom Gas getrennt ist. Hierdurch wird der Kontakt zwischen Gas und Kondensat erfindungsgemäß weiter in vorteilhafter Weise herabgesetzt.

Die erfindungsgemäße Vorrichtung 1 hat - sowohl in ihrer "geraden" Ausführungsform als auch in ihrer konischen Ausführungsform - den Vorteil, dass eine drastische Reduzierung des Bauvolumens gegenüber herkömmlichen Vorrichtungen zur Kältetrocknung möglich ist. Weiterhin wird es durch die Verwendung eines Materials mit sehr großer Wärmeleitfähigkeit im Bereich der ersten Wandung 41 möglich, die erfindungsgemäße Vorrichtung 1 für alle vorkommenden Anwendungsfälle einheitlich vorzusehen, so dass nicht für unterschiedliche Anwendungsfälle unterschiedliche Materialien benötigt werden. Es hat sich bei der erfindungsgemäßen Vorrichtung überraschend herausgestellt, dass die Reproduzierbarkeit von mittels einer auf die Kältetrocknung folgenden Gasanalytik ermittelten Messwerten erheblich vergrößert werden kann und dass weiterhin erheblich reduzierte Reaktionszeiten von mit der erfindungsgemäßen Vorrichtung verbundenen Anordnungen (beispielsweise Kältetrocknung mit anschließender Analytik) bei der Umschaltung zwischen (Mess)Betrieb und Test (bzw. Kalibrierung) möglich sind. Weiterhin ist es erfindungsgemäß vorteilhaft, dass eine überaus gute Trennung zwischen dem Gas und dem Kondensat möglich ist und dass die Löslichkeit der zu messenden bzw. der zu analysierenden Gase im Kondensat erheblich herabgesetzt wird. Dies erhöht die Analyserate von zu messenden Gasen erheblich, beispielsweise die Analyserate von SO₂, NOₓ und dergleichen. Weiterhin ist vorteilhaft, dass mit der erfindungsgemäßen Vorrichtung 1, insbesondere mit der erfindungsgemäßen Materialwahl, überraschend sowohl eine höhere Langzeitstabilität als auch eine höhere Standzeit der Vorrichtung 1 bzw. von Anordnungen erzielbar ist, in die die erfindungsgemäße Vorrichtung 1 integriert ist.

Um die gesamte Vorrichtung 1 gegenüber der Umgebung (kälte-) zu isolieren, ist es erfindungsgemäß vorgesehen, einen nicht dargestellten Standardisolierschlauch (oder mehrere) um die Vorrichtung 1 anzuordnen.

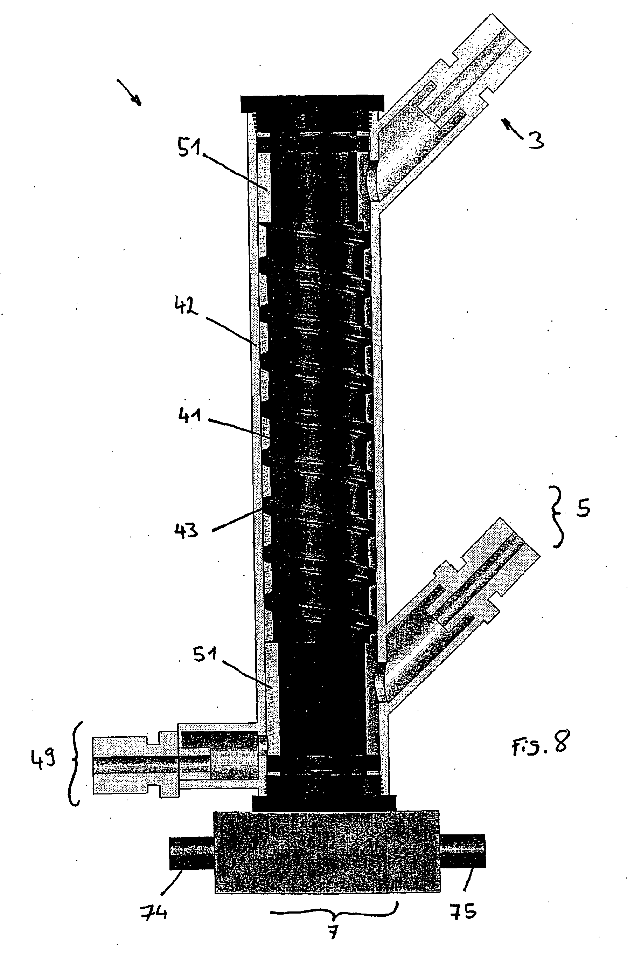

**Figur 8** zeigt eine weitere Ausführungsform der erfindungsgemäßen Vorrichtung. Die Vorrichtung weist eine Kühleinrichtung 7 auf, die über einen Kühlmittelzufluss 74 und einen Kühlmittelabfluss 75 verfügen. Des weiteren weist die Vorrichtung eine Kühlstrecke auf, die im wesentlichen eine erste Wandung 41 und eine zweite Wandung 42 aufweist. An der ersten Wandung 41 ist eine spiralförmig verlaufende Ablaufrinne 43 angeordnet. Das zu kühlende Gas strömt zwischen den Wandungen 41, 42 spiralförmig von oben nach unten. Das Bauteil 41, 43 ist in dem vorliegenden Fall Aluminium, das mit PTFE beschichtet ist. Der Fachmann erkennt, dass das Bauteil auch aus einem anderen Material gefertigt sein kann und eine andere Beschichtung aufweisen kann. Vorzugsweise weist es eine hydrophobe und/oder oloephobe Beschichtung auf. Auf die Ablaufrinne 43 ist die zweite Wandung 42, die in dem vorliegenden Fall aus PVDF besteht, aufgeschrumpft, so dass sich zwischen der äußeren Fläche der Ablaufrinne 43 und der Innenseite der zweiten Wandung 42 eine gas- und flüssigkeitsdichte formschlüssige Verbindung einstellt. Diese formschlüssige Verbindung führt dazu, dass sich weder gasseitig noch flüssigkeitsseitig ein Kurzschluss zwischen den Windungen einstellt. Der Fachmann erkennt, dass die Steigung der Windung je nach Anforderung variiert werden kann. Im Fall von sehr steilen Windungen ist sogar eine mehrkanalige Gasführung realisierbar. In der Wandung 42 sind der Gaseinlass 3, der Gasauslass 5 und der Kondensatablauf 49 angeordnet. Insbesondere der Gasauslass 5 ist schräg nach oben angeordnet, um zu verhindern, dass Flüssigkeitstropfen, die sich innerhalb der erfindungsgemäßen Vorrichtung bilden, mitgerissen werden. Der Fachmann erkennt, dass Gaseinlass und Gasauslass auch vertauscht werden können. Sowohl im Bereich des Gaseinlasses als auch im Bereich des Gasauslasses sind Beruhigungsstrecken 51 angeordnet, in denen eine reduzierte Strömungsgeschwindigkeit des Gases herrscht, so dass im Bereich des Gaseinlasses eine gute Gasverteilung im gesamten Querschnitt der Kühlstrecke erfolgt und im Bereich des Gasauslasses noch einmal eine Tropfenabscheidung erzielt bzw. das Mitreißen von Tropfen vermieden wird. Der Fachmann erkennt, dass mehrere erfindungsgemäße Vorrichtungen 1 modular nebeneinander aufgebaut und parallel oder in Reihe geschaltet betrieben werden können.

### Bezugszeichenliste

- 1: Vorrichtung
- 2: Gas bzw. Gas-Dampf-Gemisch
- 3: Gaseinlass
- 4: Kühlstrecke
- 5: Gasauslass
- 6: Wärmeübergangsfläche
- 7: Kühleinrichtung
- 11: Innenteil
- 41: erste Wandung
- 42: zweite Wandung
- 43: Ablaufrinne
- 44: Rinnenausnehmung
- 45: Dichtung
- 46: weitere Rinnenausnehmung
- 47: weitere Dichtung
- 48: Ablaufstrecke
- 48a: Unterbrechungsstelle
- 49: Kondensatauslass
- 51: Beruhigungszone
- 65: erster Innenquerschnitt
- 66: zweiter Innenquerschnitt
- 67: Innenbereich
- 71: Außenwandung
- 72: Kühlflüssigkeit
- 73: Innenrohr
- 74: Kühlflüssigkeitszulauf
- 75: Kühlflüssigkeitsablauf

## Patentansprüche

1. Vorrichtung (1) zur Kältetrocknung eines Gases oder eines Gas-Dampf-Gemisches mit einer zwischen einem Gaseinlass (3) und einem Gasauslass (5) vorgesehenen Kühlstrecke (4) und einer Wärmeübergangsfläche (6), **dadurch gekennzeichnet, dass** die Kühlstrecke (4) vorzugsweise aus Metall ist, und zumindest teilweise eine hydro- und/oder oleophobe Oberfläche aufweist, auf der der Kontaktwinkel eines Wasser- und/oder Öltropfens, der auf einer ultraphoben Oberfläche liegt, mehr als 150°, bevorzugt mehr als 160° und besonders bevorzugt mehr als 170° beträgt und der Abrollwinkel 20°, vorzugsweise 10° nicht überschreitet.

2. Vorrichtung (1) nach Anspruch 1, **dadurch gekennzeichnet, dass** die Kühlstrecke (4) die Wärmeübergangsfläche (6) im wesentlichen vollständig umgibt und die Kühlstrecke (4) im wesentlichen spiralförmig um die Wärmeübergangsfläche (6) verlaufend vorgesehen ist.

3. Vorrichtung nach Anspruch 2, **dadurch gekennzeichnet, dass** zwischen der ersten Wandung (41) und der zweiten Wandung (42) eine Ablaufrinne (43) vorgesehen ist, die spiralförmig angeordnet ist.

4. Vorrichtung (1) nach einem der vorhergehenden Ansprüche, **dadurch gekennzeichnet, dass** die Kühlstrecke (4) die Wärmeübergangsfläche (6) in einer zu einer gedachten Verbindungslinie zwischen dem Gaseinlass (3) und dem Gasauslass (5) senkrechten Querschnittsebene (61) im wesentlichen vollständig umgibt.

5. Vorrichtung (1) nach einem der vorhergehenden Ansprüche, **dadurch gekennzeichnet, dass** die Kühlstrecke (4) derart vorgesehen ist, dass beim Durchströmen der Kühlstrecke (4) wenigstens ein im wesentlichen vollständiger Umlauf des Gases (2) zumindest um einen Teil der Wärmeübergangsfläche (6) vorgesehen ist.

6. Vorrichtung (1) nach einem der vorhergehenden Ansprüche, **dadurch gekennzeichnet, dass** parallel zur Querschnittsebene (61) der Querschnitt eines Innenbereichs (67) der Wärmeübergangsfläche (6) im wesentlichen rund ist.

7. Vorrichtung (1) nach einem der voranstehenden Ansprüche, **dadurch gekennzeichnet**, das der Querschnitt des Innenbereichs konstant ist.

8. Vorrichtung (1) nach einem der Ansprüche 1-7. **dadurch gekennzeichnet, dass** am Gaseinlass (3) der Querschnitt eines Innenbereichs (67) der Wärmeübergangsfläche (6) parallel zur Querschnittsebene (61) kleiner ist als am Gasauslass (5), insbesondere dass die Wärmeübergangsfläche (6) im wesentlichen kegelstumpfförmig oder pyramidenstumpfförmig vorgesehen ist.

9. Vorrichtung (1) nach einem der vorhergehenden Ansprüche, **dadurch gekennzeichnet, dass** der Vorrichtung (1) wenigstens ein Teil einer zumindest teilweise im Innenbereich (67) der Wärmeübergangsfläche (6) vorgesehenen Kühleinrichtung (7) zugeordnet ist.

10. Vorrichtung (1) nach einem der vorhergehenden Ansprüche, **dadurch gekennzeichnet, dass** die Kühleinrichtung (7) eine Überflutungskühleinrichtung ist.

11. Vorrichtung (1) nach einem der vorhergehenden Ansprüche, **dadurch gekennzeichnet, dass** die Kühlstrecke (4) im wesentlichen zwischen einer ersten inneren Wandung (41) und einer zweiten äußeren Wandung (42) vorgesehen ist, wobei die Wandungen (41, 42) die Wärmeübergangsfläche (6) im wesentlichen vollständig umgeben.

12. Vorrichtung (1) nach einem der vorhergehenden Ansprüche, **dadurch gekennzeichnet, dass** die erste Wandung (41) und/oder die zweite Wandung (42) entlang der vorgesehenen Ablaufrinne (43) wenigstens eine Rinnenausnehmung (44) umfasst.

13. Vorrichtung (1) nach einem der vorhergehenden Ansprüche, **dadurch gekennzeichnet, dass** die Vorrichtung (1) zur Bildung der Ablaufrinne (43) eine Dichtung (45), insbesondere aus einen runden oder einen ovalen Querschnitt aufweisendem Gummimaterial, vorzugsweise Viton B, in der Rinnenausnehmung (44) aufweist.

14. Vorrichtung (1) nach einem der vorhergehenden Ansprüche, **dadurch gekennzeichnet, dass** parallel zur Rinnenausnehmung (44), eine weitere Rinnenausnehmung (46) derart vorgesehen ist, dass die Vorrichtung (1) parallel zur Kühlstrecke (4) eine Ablaufstrecke (48) aufweist.

15. Vorrichtung (1) nach einem der vorhergehenden Ansprüche, **dadurch gekennzeichnet, dass** die Vorrichtung (1) zur Bildung der Ablaufrinne (43) und der Ablaufstrecke (48) eine weitere Dichtung (47), insbesondere aus einen runden oder einen ovalen Querschnitt aufweisendem Gummimaterial, vorzugsweise Viton B, in der weiteren Rinnenausnehmung (46) aufweist.

16. Vorrichtung (1) nach einem der vorhergehenden Ansprüche, **dadurch gekennzeichnet, dass** die Vorrichtung (1) einen Kondensatauslass (49) im Bereich des Endes der Kühlstrecke (4) aufweist, wobei bevorzugt ist, dass entlang der Kühlstrecke (4) und vor dem Kondensatauslass (49) ein weiterer Kondensatauslass vorgesehen ist, insbesondere im Bereich der Mitte oder von zwei Dritteln der Kühlstrecke (4).

17. Vorrichtung (1) nach einem der vorhergehenden Ansprüche, **dadurch gekennzeichnet, dass** die weitere Dichtung (47) an wenigstens einer Unterbrechungsstelle (48a) unterbrochen ist.

## Claims

1. Device (1) for freeze-drying a gas or a gas-vapour mixture with a cooling section (4) provided between a gas inlet (3) and a gas outlet (5) and a heat transfer surface (6), **characterised in that** the cooling section (4) is preferably made of metal and at least partially has a hydro- and/or oleophobic surface, on which the angle of contact of a drop of water and/or oil lying on an ultraphobic surface amounts to more than 1 SO°, preferably more than 160° and particularly preferred more than 170°, and the roll angle does not exceed 20°, preferably 10°.

2. Device (1) according to claim 1, **characterised in that** the cooling section (4) surrounds the heat transfer surface (6) substantially completely and the cooling section (4) is provided to run substantially in a spiral around the heat transfer surface (6).

3. Device according to claim 2, **characterised in that** a discharge channel (43) arranged in a spiral shape is provided between the first wall (41) and the second wall (42).

4. Device (1) according to one of the preceding claims, **characterised in that** the cooling section (4) surrounds the heat transfer surface (6) substantially completely in a perpendicular cross-sectional plane (61) to an imaginary connection line between the gas inlet (3) and the gas outlet (5).

5. Device (1) according to one of the preceding claims, **characterised in that** the cooling section (4) is provided so that at least one substantially complete circuit of the gas (2) at least around a portion of the heat transfer surface (6) is provided when it flows through the cooling section (4).

6. Device (1) according to one of the preceding claims, **characterised in that** parallel to the cross-sectional plane (61) the cross-section of an inner region (67) of the heat transfer surface (6) is substantially round.

7. Device (1) according to one of the preceding claims, **characterised in that** the cross-section of the inner region is constant.

8. Device (1) according to one of claims 1-7, **characterised in that** the cross-section of an inner region (67) of the heat transfer surface (6) parallel to the cross-sectional plane (61) is smaller at the gas inlet (3) than at the gas outlet (5), in particular that the heat transfer surface (6) is provided substantially in the shape of a truncated cone or a truncated pyramid.

9. Device (1) according to one of the preceding claims, **characterised in that** at least one part of a cooling means (7) provided at least partially in the inner region (67) of the heat transfer surface (6) is associated with the device (1).

10. Device (1) according to one of the preceding claims, **characterised in that** the cooling means (7) is an overflow cooling means.

11. Device (1) according to one of the preceding claims, **characterised in that** the cooling section (4) is provided substantially between a first inner wall (41) and a second outer wall (42), wherein the walls (41, 42) surround the heat transfer surface (6) substantially completely.

12. Device (1) according to one of the preceding claims, **characterised in that** the first wall (41) and/or the second wall (42) comprise at least one channel recess (44) along the provided discharge channel (43).

13. Device (1) according to one of the preceding claims, **characterised in that** the device (1) has a seal (45), in particular made of a rubber material having a round or an oval cross-section, preferably Viton B, in the channel recess (44) to form the discharge channel (43).

14. Device (1) according to one of the preceding claims, **characterised in that** a further channel recess (46) is provided parallel to the channel recess (44), so that the device (1) has a discharge section (48) parallel to the cooling section (4).

15. Device (1) according to one of the preceding claims, **characterised in that** the device (1) has a further seal (47), in particular made of a rubber material having a round or an oval cross-section, preferably Viton B, in the further channel recess (46) to form the discharge channel (43) and the discharge section (48).

16. Device (1) according to one of the preceding claims, **characterised in that** the device (1) has a condensate outlet (49) in the region of the end of the cooling section (4), wherein it is preferred that a further condensate outlet is provided along the cooling section (4) and in front of the condensate outlet (49), in particular in the region of the centre or two thirds along the cooling section (4).

17. Device (1) according to one of the preceding claims, **characterised in that** the further seal (47) has a break at least at one interruption point (48a).

## Revendications

1. Dispositif (1) de séchage à froid d'un gaz ou d'un mélange gaz-vapeur à l'aide d'une section de refroidissement (4) prévue entre un orifice d'admission de gaz (3) et un orifice de sortie de gaz (5) et une surface de transfert de chaleur (6), **caractérisé en ce que** la section de refroidissement (4) est fabriquée de préférence en métal et possède au moins partiellement une surface hydrophobe et/ou oléophobe, sur laquelle l'angle de contact d'une goutte d'eau et/ou d'huile posée sur une surface ultraphobe est égal à plus de 150°, de préférence plus de 160° et de préférence particulière est égal à plus de 170°, alors que l'angle d'inclinaison ne dépasse pas 20°, de préférence 10°.

2. Dispositif (1) selon la revendication 1, **caractérisé en ce que** la section de refroidissement (4) entoure de façon sensiblement complète la surface de transfert de chaleur (6), et la section de refroidissement (4) est conçue pour s'étendre sensiblement en spirale autour de la surface de transfert de chaleur (6).

3. Dispositif selon la revendication 2, **caractérisé en ce qu'**un passage de décharge (43), agencé sous forme de spirale, est prévu entre la première paroi (41) et la deuxième paroi (42).

4. Dispositif (1) selon l'une des revendications précédentes, **caractérisé en ce que** la section de refroidissement (4) entoure de façon sensiblement complète la surface de transfert de chaleur (6) suivant un plan transversal perpendiculaire (61) par rapport à une ligne de raccordement imaginaire entre l'orifice d'admission de gaz (3) et l'orifice de sortie de gaz (5).

5. Dispositif (1) selon l'une des revendications précédentes, **caractérisé en ce que** la section de refroidissement (4) est conçue de sorte qu'au moins un circuit sensiblement complet de gaz (2), autour d'une partie au moins de la surface de transfert de chaleur (6), est effectué lorsqu'il s'écoule à travers la section de refroidissement (4).

6. Dispositif (1) selon l'une des revendications précédentes, **caractérisé en ce que** la coupe transversale d'une zone interne (67) de la surface de transfert de chaleur (6), en parallèle avec le plan transversal (61), est sensiblement ronde.

7. Dispositif (1) selon l'une des revendications précédentes, **caractérisé en ce que** la coupe transversale de la zone interne est constante.

8. Dispositif (1) selon l'une des revendications 1 à 7, **caractérisé en ce que** la coupe transversale d'une zone interne (67) de la surface de transfert de chaleur (6), parallèle au plan transversal (61), est plus petite au niveau de l'orifice d'admission de gaz (3) qu'au niveau de l'orifice de sortie de gaz (5), et en particulier que la surface de transfert de chaleur (6) se présente sensiblement sous la forme d'un cône tronqué ou d'une pyramide tronquée.

9. Dispositif (1) selon l'une des revendications précédentes, **caractérisé en ce qu'**une partie au moins des moyens de refroidissement (7), montés au moins partiellement dans la zone interne (67) de la surface de transfert de chaleur (6), est associée au dispositif (1).

10. Dispositif (1) selon l'une des revendications précédentes, **caractérisé en ce que** les moyens de refroidissement (7) sont des moyens de refroidissement à trop-plein.

11. Dispositif (1) selon l'une des revendications précédentes, **caractérisé en ce que** la section de refroidissement (4) est sensiblement montée entre une première paroi interne (41) et une deuxième paroi externe (42), cas dans lequel les parois (41, 42) entourent de façon sensiblement complète la surface de transfert de chaleur (6).

12. Dispositif (1) selon l'une des revendications précédentes, **caractérisé en ce que** la première paroi (41) et/ou la deuxième paroi (42) comporte au moins un évidement de passage (44) le long du passage de décharge (43) qui est prévu.

13. Dispositif (1) selon l'une des revendications précédentes, **caractérisé en ce que** le dispositif (1) possède un joint d'étanchéité (45), réalisé en particulier en une matière à base de caoutchouc ayant une coupe transversale ronde ou ovale, de préférence en Viton B, dans l'évidement de passage (44) afin de constituer le passage de décharge (43).

14. Dispositif (1) selon l'une des revendications précédentes, **caractérisé en ce qu'**un évidement de passage (46) supplémentaire est monté parallèlement à l'évidement de passage (44), de sorte que le dispositif (1) présente une section de décharge (48) qui est parallèle à la section de refroidissement (4).

15. Dispositif (1) selon l'une des revendications précédentes, **caractérisé en ce que** le dispositif (1) possède un joint d'étanchéité (47) supplémentaire, réalisé en particulier en une matière à base de caoutchouc ayant une coupe transversale ronde ou ovale, de préférence en Viton B, dans l'évidement de passage (46) supplémentaire afin de constituer le passage de décharge (43) et la section de décharge (48).

16. Dispositif (1) selon l'une des revendications précédentes, **caractérisé en ce que** le dispositif (1) possède un orifice de sortie de condensat (49) dans la zone située à l'extrémité de la section de refroidissement (4), cas dans lequel un orifice de sortie de condensat supplémentaire est monté de préférence le long de la section de refroidissement (4) et devant l'orifice de sortie de condensat (49), en particulier dans la zone du centre ou aux deux-tiers le long de la section de refroidissement (4).

17. Dispositif (1) selon l'une des revendications précédentes, **caractérisé en ce que** le joint d'étanchéité (47) supplémentaire possède un dégagement au niveau d'au moins un point d'interruption (48a).
